# EUROPEAN PATENT APPLICATION

(11) **EP 2 418 516 A2**
(43) Date of publication of application: **15.02.2012**
(21) Application number: 11176515.2
(22) Date of filing: 04.08.2011
(51) Int. Cl.: G01V 3/14, G01R 33/44

(54) **Apparatus and method for detecting the presence of a particle of a ferromagnetic metal in a packaging of a paramagnetic material**

(30) Priority: 12.08.2010 EP 10425274
(71) Applicant: E-Pharma Trento S.p.A., 38123 Trento (IT)
(72) Inventor: Rocco, Romano, 80040 San Sebastiano al Vesuvio (NA) (IT); Barone, Fabrizio, 80138 NAPOLI (IT)
(74) Representative: Colombo, Stefano Paolo

(57) **Abstract**

It is disclosed a method for checking a packaged product in order to know if it is free of particles of a ferromagnetic metal or contains a particle of a ferromagnetic metal. The packaged product comprises a packaging comprising a paramagnetic and/or diamagnetic metal. The method comprises: providing a static magnetic field B₀; providing a phantom body in the field B₀; plunging the packaged product into the field B₀; acquiring a number of magnetic resonance signals generated by elementary volumetric portions (voxels) of a slice of the phantom body; on the basis of the magnetic resonance signals, generating an image of the slice; if the image does not show an artefact , declaring that the packaged product is free of particles of a ferromagnetic metal; and if the image shows an artefact, declaring that the packaged product contains a particle of a ferromagnetic metal.

## Description

### Technical Field

The present invention generally relates to the detection of a metal particle in a packaging. In particular, the present invention relates to an apparatus and a method for detecting the presence of a particle comprising a ferromagnetic metal in a packaging comprising a paramagnetic and/or diamagnetic material. The particle to be detected could comprise steel, stainless steel, iron or similar materials. The packaging could for example comprise layers of aluminium and contain for example a pharmaceutical product.

### Backgound art

In various industrial sectors, such as for example the pharmaceutical, parapharmaceutical, homeopathic, food or cosmetics industry, some products are subject to a series of manufacturing processes during which they may be contaminated by particles of metallic material (and, in particular, ferromagnetic metallic material). The particles may typically result from the breakage or the deterioration of some metal parts of the machinery which perform the manufacturing processes. Moreover, contaminating metal particles may be present in the raw materials used in order to obtain the semifinished or end product.

For example, with regard to the production of granulated pharmaceutical products, the granulated material is typically passed through sieves which are made of a ferromagnetic metallic material such as steel. If the meshes of a sieve are damaged, they may break and some small pieces or particles of steel may become intermingled with the granulated product to be packaged. In this case, entire batches of the packaged product may be contaminated. This results in a serious hazard for the safety of the consumer.

For this reason, typically the processing machines are subject to constant integrity checks. If a machine is found to be in not perfect condition, the manufacturer is obliged to withdraw from production and from subsequent distribution entire batches of the potentially contaminated product. This results in a significant economic loss for the manufacturer.

It is known to package some pharmaceutical, parapharmaceutical, homeopathic, food, cosmetic or similar products in packaging which are substantially water-tight and air-tight. In particular, water-tightness and airtightness are to be guaranteed when effervescent products are to be packaged, in order to avoid deterioration of the products due to humidity. These packages typically comprise a layer of aluminium or other similar material. Examples of packaging used in the aforementioned fields are the so-called "single-dose" sachets for powders or granules which are internally aluminium-lined.

In the food industry it is known to inspect the products using a metal detector in order to detect the presence of undesirable metal particles. For example, GB 2,462,212 discloses an apparatus for detecting the presence of metal particles in a food product. The apparatus comprises a first coil which is operated by a driving circuit and a second coil connected to a detection circuit which detects a signal coming from it. The driving circuit supplies the first coil with signals at different frequencies so that any metal particle in the product is subject to scanning at different frequencies.

WO 2004/104989 discloses magnetic resonance measurement methods for determining the mass of samples and determining the presence of metal in samples. The methods include applying a magnetic field in a first direction in an interrogation zone for creating a net magnetization within a sample; applying an alternating magnetic field in a second direction in the interrogating zone for temporarily changing the net magnetization of the sample; monitoring energy emitted by the sample as the net magnetization of the sample returns to its original state and generating an output signal having a characteristic which is proportional to the energy emitted; and comparing the output signal with other data.

### Summary of the invention

The Applicant has addressed the problem of detecting undesirable metal particles in a packaged product, for example in a pharmaceutical or similar product. More particularly, the Applicant has addressed the problem of detecting undesirable metal particles in a product contained in a packaging comprising aluminium or another paramagnetic and/or diamagnetic material.

The Applicant has realised that the solution described in GB 2,462,212 is configured to detect ferromagnetic metal particles in products which are not packaged.

However, the Applicant has noticed that the solution described in GB 2,462,212 would not be able to detect the presence of ferromagnetic metal particles within a packaging comprising aluminium or another paramagnetic and/or diamagnetic material. In fact, in this case, both the ferromagnetic particle and the aluminium present in the packaging in the vicinity of the alternating magnetic field of the apparatus of GB 2,462,212 would generate induction electric currents. The magnetic field generated by the induction currents which are formed in the aluminium layer would mask the magnetic field which is generated as a result of the induction currents present in the ferromagnetic particle.

Moreover, the Applicant has noticed that the method described in WO 2004/104989 has some drawbacks. Indeed, when it is applied to the detection of metals in products, it provides for detecting a single magnetic resonance signal generated by the entire volume of a "stationary sample" contained in the measurement probe. In case of the simultaneous presence of a metal in the measurement probe, the signal coming from the sample becomes degraded. However, the Applicant has noticed that the method of WO 2004/104989 may have a reduced sensitivity in detecting a small particle of a metal in a packaged product as the particle may cause a negligible degradation of the signal which may not be detectable. Therefore, the method of WO 2004/104989 could not allow making a reliable detection of the metal particles. Moreover, WO 2004/104989 fails to consider detecting particles of metal in a sachet comprising aluminium or another paramagnetic and/or diamagnetic material.

The object of the present invention is therefore to provide an apparatus and a method for detecting the presence of a particle comprising a ferromagnetic metal in a packaging comprising a paramagnetic and/or diamagnetic material which allows performing such detection in a reliable way.

According to a first aspect, the present invention provides a method for checking a packaged product in order to know if said packaged product is free of particles of a ferromagnetic metal or contains a particle of a ferromagnetic metal, wherein said packaged product comprises a packaging comprising a paramagnetic and/or diamagnetic metal. The method comprises:
a) providing a static magnetic field;
b) providing a phantom body in said static magnetic field;
c) plunging said packaged product into said static magnetic field;
d) acquiring a number of magnetic resonance signals generated by elementary volumetric portions of a slice of the phantom body;
e) on the basis of said magnetic resonance signals, generating an image of said slice;
f) comparing said image with a reference image;
g) if said comparing does not show an artefact, declaring that said packaged product is free of particles of a ferromagnetic metal; and
h) if said comparing shows an artefact, declaring that said packaged product contains a particle of a ferromagnetic metal.

In embodiments of the invention, the slice is profitably situated in the vicinity of said packaged product.

Preferably, the slice comprises a surface of the phantom body facing the packaged product.

In preferred embodiments, the packaging is a sachet. The method preferably further comprises conveying said packaged product arranged substantially parallel to said surface.

Said surface preferably is at a distance less than about 5 cm from said packaged product.

Preferably, the reference image corresponds to an image of said packaged product free of ferromagnetic metal particles.

Said step h) may comprise generating an alarm signal.

According to a second aspect, the present invention provides an apparatus for checking a packaged product in order to know if said packaged product is free of particles of a ferromagnetic metal or contains a particle of a ferromagnetic metal, wherein said packaged product comprises a packaging comprising a paramagnetic and/or diamagnetic metal, said apparatus comprising:
- a main magnet providing a static magnetic field;
- a phantom body, said phantom body being in a fixed position with respect to said main magnet and comprising a composition able to generate magnetic resonance signals of elementary volumetric portions (voxels) of a slice of said phantom body when subject to said static magnetic field;
- a signal detection unit acquiring said magnetic resonance signals generated by said elementary volumetric portions (voxels) of said slice of the phantom body; and
- a control unit comprising:
   - a data processing unit suitable for, on the basis of said magnetic resonance signals, generating an image of said slice; and
   - an image processing module suitable for comparing said image with a reference image.

The main magnet may be a permanent magnet or any other magnet which is able to provide a homogeneous static magnetic field.

Preferably, said signal detection unit comprises a radiofrequency coil suitable for acquiring said magnetic resonance signals.

Preferably, said radiofrequency coil is in a fixed position with respect to said main magnet.

Preferably, said image processing module is suitable for generating an alarm signal if said image contains an artefact.

In preferred embodiments, said packaging is a sachet.

According to a third aspect, the present invention provides a system for conveying a packaged product, wherein said packaged product comprises a packaging comprising a paramagnetic and/or diamagnetic metal, said system comprising a conveying device and an apparatus for checking said packaged product in order to know if said packaged product is free of particles of a ferromagnetic metal or contains a particle of a ferromagnetic metal, said apparatus being an apparatus as set forth above.

The conveying device may be partially housed inside a longitudinal cavity of said main magnet.

The packaging may be a sachet, wherein said conveying device conveys the packaged product arranged substantially parallel to said phantom body.

### Brief description of the drawings

The present invention will emerge more clearly from the following description, provided by way of a non-limiting example, with reference to the accompanying drawings in which:
- Figure 1 is a schematic representation of an apparatus according to an embodiment of the present invention;
- Figure 2 shows a flow chart of the operation of the apparatus of Figure 1;
- Figures 3a, 3b, 3c schematically show the force lines of a static magnetic field in the presence of a diamagnetic, paramagnetic and ferromagnetic material, respectively; and
- Figures 4a and 4b show two images of a phantom body, acquired by means of an apparatus according to an embodiment of the present invention.

### Detailed description of preferred embodiments

In the present description and in the claims below, the term "product" is understood as meaning a given quantity of a solid substance, including also a substance in the form of a powder or granules which does not give rise to a magnetic resonance signal. By way of a non-limiting example, a product could consist of a pharmaceutical, parapharmaceutical, homeopathic, food or cosmetic product. A product may be in the form of effervescent granules or soluble granules.

The adjective "paramagnetic", when used in conjunction with a magnetized material, indicates that the material has a relative magnetic permeability µᵣ which is constant, with respect to the magnetic field inducing magnetization, and greater than 1 (typically greater than 1 by a few ppm). An example of such a paramagnetic material is aluminium (µᵣ=1.000022).

The adjective "diamagnetic", when used in conjunction with a magnetized material, indicates that the material has a relative magnetic permeability µᵣ which is constant, with respect to the magnetic field inducing magnetization, and less than 1 (typically less than 1 by a few ppm). All materials have a diamagnetic component in their magnetic properties, even though in the case of paramagnetic and ferromagnetic materials it is masked by the other preponderant magnetic effects.

The adjective "ferromagnetic", when used in conjunction with a magnetized metal, indicates that the metal has a relative magnetic permeability µᵣ which is not constant, depending on the magnetic field inducing the magnetization, and much greater than 1. Examples of such ferromagnetic materials are steel, iron and nickel.

In the present description and in the claims below, the expressions "packaging of a paramagnetic material", "packaging comprising a paramagnetic material" (or simply "packaging") are understood as meaning a container made at least partly of a paramagnetic and/or a diamagnetic material such as aluminium, aluminium alloy or the like. According to embodiments, a packaging could be a substantially flat packaging such as a single-dose sachet formed by a layered material in which one of said layers consists of an aluminium foil.

In the present description and in the claims below, the expression "packaged product" is understood as meaning the assembly consisting of the product and its packaging.

In the present description and in the claims below, the expression "particle comprising a ferromagnetic metal", "particle of a ferromagnetic metal" (or simply "particle") is understood as meaning a metal body, for example an iron, steel, brass or chrome body. Typically, a particle has a size of a few millimetres and any shape. Preferably, a particle has a volume not less than the volume of a sphere with a 0.5 mm diameter.

The adjective "contaminated", when used in conjunction with a packaged product, indicates that the packaged product contains one or more particles and is therefore contaminated by their presence.

In the present description and in the claims, the term "artefact" in an image is understood as meaning an area of the image whose colour is in contrast with the colour of the neighbour areas of the image. In particular, in a black/white image an artefact could be a black area over a grey or white (possibly homogeneous) background.

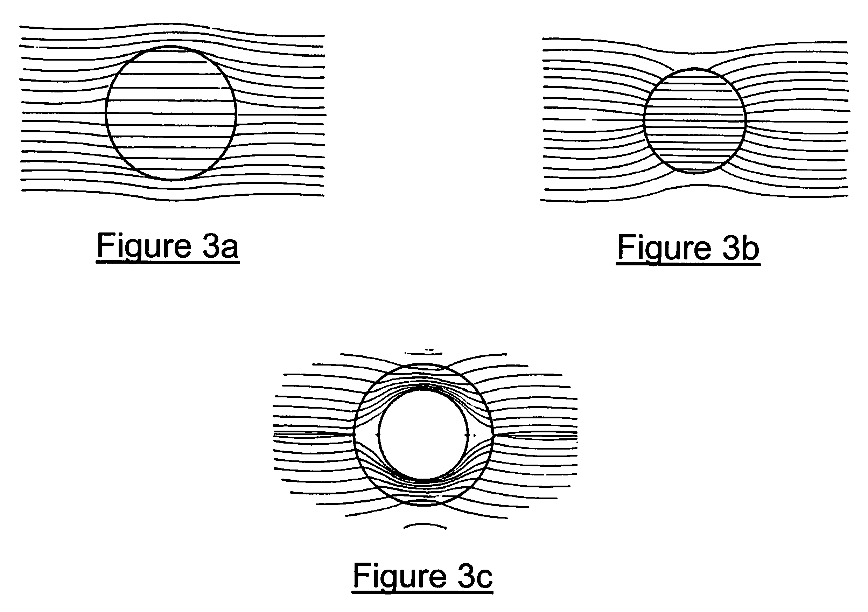

The detection apparatus according to an embodiment of the present invention comprises a main magnet, a signal detection unit and a control and - where applicable - signalling unit (in short, control unit). The main magnet is configured to generate a static magnetic field. According to the present invention, a packaged product is passed within the static magnetic field. If the packaged product does not contain a particle, the static magnetic field is not disturbed by the passing of the packaged product, as shown in Figures 3a and 3b. However, if the packaged product is contaminated and contains at least one particle, the static magnetic field is disturbed (i.e. its homogeneity is locally distorted) by the passing of the contaminated packaged product, as shown in Figure 3c. The signal detection unit detects magnetic resonance signals generated by elementary volumetric portions (which may be termed voxels) of a slice of a phantom body, which is especially configured (indeed, the packaged product does not give rise to a magnetic resonance signal), located within the detection apparatus and in the proximity of the packaged product. Then, the control unit processes the detected signals in order to generate an image of the phantom body slice: usually the signal detected in each voxel is displayed as the brightness of a point in the image (pixel). If the packaged product is contaminated, some magnetic resonance signals, namely the signals coming from the voxels in the vicinity of the particle, are disturbed, due to the local lack of homogeneity of the static magnetic field, and the generated slice image is indicative of this disturbance. Finally, the control unit processes and/or stores the images and if necessary generates a corresponding signalling event. Thanks to the present invention, if a contaminated packaged product is detected, it is discarded without adversely affecting the other packaged products which are not contaminated.

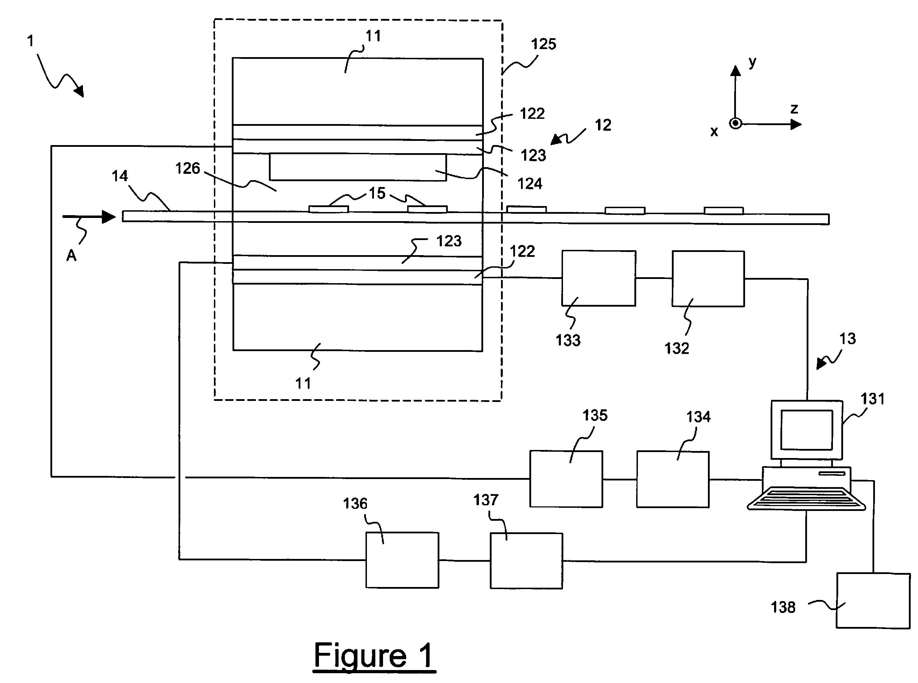

Figure 1 schematically shows a detection apparatus 1 according to an embodiment of the present invention.

The detection apparatus 1 preferably comprises a main magnet 11, a signal detection unit 12 and a control unit 13.

The main magnet 11 is preferably in the form of a hollow cylinder and defines a cylindrical cavity 126 along its longitudinal axis (axis z in Figure 1). Alternatively, the main magnet 11 may be in the form of a C or U, i.e. with a longitudinal slit.

The signal detection unit 12 comprises three gradient coils 122, a radiofrequency coil 123 and a phantom body 124. Preferably it also comprises a radiofrequency screen 125.

The gradient coils 122 and radiofrequency coil 132 preferably comprise one or more windings of a wire of electrically conductive material, for example copper. As shown in Figure 1, the coils are preferably housed inside the longitudinal cavity 126 of the main magnet 11 and are arranged coaxially therewith with respect to the longitudinal axis of the main magnet 11. The windings may assume different configurations which will not be further described since they are not relevant to the present invention. Preferably, the position of the gradient coils 122 and the radiofrequency coil 123 is fixed with respect to the main magnet 11.

The phantom body 124 is preferably housed inside the longitudinal cavity 126 of the main magnet 11. The phantom body 124 is preferably fixed with respect to the main magnet 11.

The main magnet 11 is preferably suitable for generating a static magnetic field B₀ which is substantially homogeneous in at least one portion of its longitudinal cavity 126. The main magnet 11 may be, for example, a permanent magnet or any other magnet which is able to provide a homogeneous static magnetic field. The strength of the static magnetic field B₀ may be a few tenths of a Tesla, for example between about 0.3 T and about 0.4 T. However, higher or lower field strength values could be used.

Preferably, the strength of the static magnetic field B₀ is substantially homogeneous in the region of the phantom body 124. In particular, if a variation of the static magnetic field B₀ is defined as the ratio [(B₀ₘₐₓ-B₀ₘᵢₙ)/B₀ₐᵥ]x10⁶ , B₀ₘₐₓ. B₀ₘᵢₙ and Boav being respectively the maximum, minimum and mean magnetic field strengths inside a sphere having a diameter such as to contain the phantom body 124, the variation is preferably less than about 5 ppm.

The diameter of the abovementioned sphere is typically related to the physical dimensions of the phantom body 124. For example, in the case of a phantom body with a volume of 16x16x3 cm³, suitable for detecting particles in single-dose sachets of a product having a size of about 10x15 cm², the diameter of the sphere inside which the strength of the static magnetic field B₀ is substantially homogeneous may be 25 cm. Preferably, this sphere is contained within the longitudinal cavity of the magnet 11 and is substantially in a position corresponding to the geometric centre of the longitudinal cavity of the magnet 11.

The gradient coils 122 are preferably suitable for generating respective static magnetic fields, the strength of which is linearly variable along the directions of the axes x, y and z.

The radiofrequency coil 123 is preferably suitable for generating an alternating magnetic field B₁, in the transverse direction with respect to the static magnetic field B₀, and capture a magnetic resonance signal from the phantom body 124, as it will be described in greater detail hereinafter.

The phantom body 124 is preferably a body having the shape of a parallelepiped or of a cylinder with a circular cross-section made of a plastic material, such as for example plexiglass, virgin polystyrene - TC, or glass, and is hollow or partly hollow. Preferably, the phantom body 124 is filled with a composition suitable for generating a magnetic resonance signal, as will be described in greater detail in the present description hereinafter. For example, the composition contained inside the phantom body 124 may be a solution of water and copper sulphate. This solution may for example contain 770 mg of copper sulphate pentahydrate CuSO₄·5H₂O, 1 ml of a 1 molar solution of sodium azide NaN₃, 0.15 ml of a 1 normal solution of sulphuric acid H₂SO₄ and double distilled water. Alternatively, the composition contained in the phantom body 124 may be a paramagnetic aqueous solution (for example with nickel or manganese) or a pure gel of gelatine, agar, polyvinyl alcohol, silicone, polyacrylamide, agarose, organic doped gel, a paramagnetic doped gel or a reverse micelle solution.

The radiofrequency screen 125 preferably surrounds the main magnet 11, the gradient coils 122 and the radiofrequency coil 123. This screen 125 is preferably a Faraday cage suitable for screening the signal detecting unit 12 in order to prevent the radiofrequency signals supplied from the exterior, for example from the control unit 13, from interfering with the signal detecting unit 12, for example being captured by the radiofrequency coil 123.

The control unit 13 of the detection apparatus 1 comprises a control module 131, a gradient waveform generator 132, a gradient amplifier 133, a radiofrequency waveform generator 134, a radiofrequency amplifier 135, a radiofrequency receiver 136, a data processing module 137 and an image processing module 138. The control unit 13 may comprise further components not shown in Figure 1 since they are not relevant for the purposes of the present description.

Preferably, the control module 131 is connected to the gradient waveform generator 132 which is in turn connected to the gradient amplifier 133. The gradient amplifier 133 is preferably connected to the gradient coils 122 of the signal detection unit 12.

Moreover, the control module 131 is connected to the radiofrequency waveform generator 134. The radiofrequency waveform generator 134 is preferably connected to the radiofrequency amplifier 135 which is in turn connected to the radiofrequency coil 123 of the signal detection unit 12.

The radiofrequency coil 123 is moreover preferably connected to the radiofrequency receiver 136 which is in turn connected in cascade to the data processing module 137 and to the control module 131. Finally, the control module 131 is preferably connected to the image processing module 138.

Preferably, the control module 131 is configured to control the operation of the detection apparatus 1 and comprises a user interface with a data input peripheral (e.g. a keyboard), a display device (e.g. a monitor) and an audio reproduction device (e.g. loudspeakers), not shown in Figure 1. Moreover, the control module 131 preferably comprises a processor (also not shown in Figure 1) and one or more storage devices (e.g. hard disks).

The detection apparatus 1 is configured to co-operate with a machine for conveying packaged products. This machine is not shown in the figures because it is not relevant for the purposes of the present invention.

This machine typically comprises a device for conveying packaged products, such as a conveyor belt 14, which is schematically shown in Figure 1.

The conveyor belt 14 is suitable for conveying a plurality of packaged products 15 arranged in a row or in several adjacent rows. The plurality of packaged products 15 may be sachets, containing granules or the like, arranged substantially horizontally on the conveyor belt. In Figure 1 the conveying direction is shown by an arrow indicated by the letter A. The conveyor belt 14 passes through the longitudinal cavity 126 of the main magnet 11. Therefore, the packaged products 15 in turn pass through the longitudinal cavity 126 in a direction parallel to the longitudinal axis of the main magnet 11 and pass through the static magnetic field B₀ generated by the main magnet 11.

Preferably, the position of the conveyor belt 14 is such that, when each packaged product conveyed on the conveyor belt 14 is in the vicinity of the phantom body 124 (i.e. immediately underneath it), the distance between the top surface of the packaged product and the bottom surface of the phantom body 124 is such as to allow detection also of small disturbances of the static magnetic field B₀ caused by the passing of a small particle present inside a contaminated packaged product. Preferably, the distance could be less than about 5 cm. In some embodiments, such a distance is less than about 3 cm. In other embodiments the distance is less than about 2 cm or even less than about 1 cm. For example, in order to detect the presence of a spherical particle with a diameter of 0.5 mm inside a single-dose sachet containing a granulated product and internally lined with an aluminium layer, the distance between the top surface of the sachet and the bottom surface of the phantom body 124 must not be greater than about 1 cm.

Preferably, the conveyor belt 14 is made of paramagnetic and/or diamagnetic material, in particular a plastic material, for example Teflon.

According to one embodiment, the conveyor belt 14 is operated by a motor situated outside the radiofrequency screen 125.

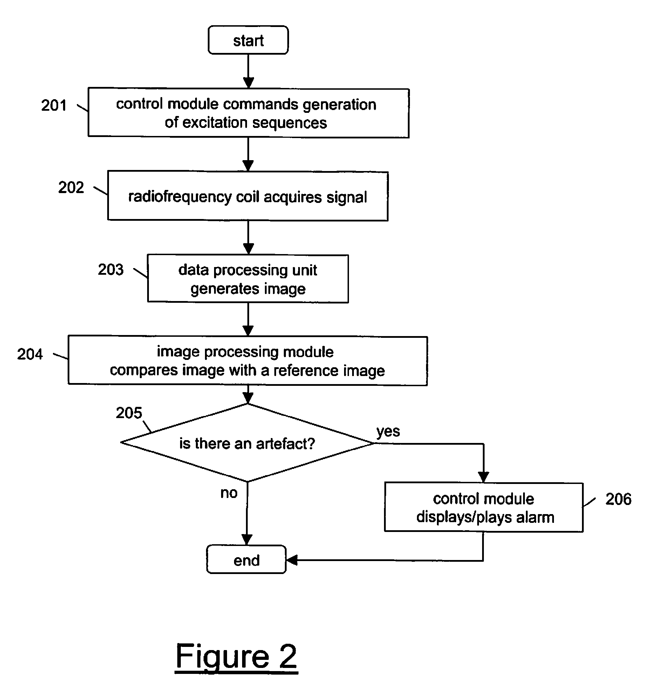

In the following of present description, the operation of the detection device 1 will be described in detail with reference to Figure 2.

Preferably, an initialisation step of the detection apparatus 1 is performed. This step is not indicated in Figure 2. During the initialisation step, the operator, via the data input peripheral of the control module 131, sets up the control module 131 so that, during a subsequent operation, it sends a command to the gradient waveform generator 132 and to the radiofrequency waveform generator 134. The commands sent to the generators 132 and 134 produce the generation of respective excitation sequences so as to feed, respectively, the gradient coils 122 and the radiofrequency coil 123 and so as to detect, afterwards, a magnetic resonance signal which allows the generation of an image of the phantom body 124.

It is assumed that a packaged product is positioned on the conveyor belt 14 and that the conveyor belt 14 conveys it through the longitudinal cavity 126 of the main magnet 11. It is also assumed that the product inside the packaging may comprise one or more particles of a ferromagnetic metal.

When the packaged product passes through the geometric centre of the longitudinal cavity 126 and is situated underneath the phantom body 124, it interacts with the static magnetic field B₀.

In particular, the behaviour of a packaged product plunged into the static magnetic field B₀ varies depending on whether the packaged product comprises only diamagnetic and/or paramagnetic materials or also ferromagnetic metals. As is known, a diamagnetic or paramagnetic material, when plunged into the static magnetic field B₀, does not substantially alter the homogeneity of the field, while a ferromagnetic metal instead considerably alters the homogeneity thereof.

If, therefore, the packaged product does not contain any particle of ferromagnetic metallic material, when plunged into the static magnetic field B₀, it does not substantially alter its homogeneity. On the other hand, if the packaged product contains at least one particle, when plunged into the static magnetic field B₀, it significantly alters locally its homogeneity. In particular, in this case, the strength of the static magnetic field B₀ is not homogeneous inside the particle and in the vicinity thereof.

During a step 201, when the packaged product passes through the longitudinal cavity 126 underneath the phantom body 124, the control module 131 sends a command both to the gradient waveform generator 132 and to the radiofrequency waveform generator 134 so that each of them generates the respective excitation sequence.

In particular, the gradient waveform generator 132 generates an excitation sequence in the form of a sequence of gradient pulses which is suitably amplified by the gradient amplifier 133 and modulates three different pulse current signals which feed the three gradient coils 122. The radiofrequency waveform generator 134 generates a radiofrequency monochromatic signal which is suitably modulated in order to provide the respective excitation sequence in the form of a sequence of radiofrequency pulses. This sequence of radiofrequency pulses is suitably amplified by the radiofrequency amplifier 135 and modulates a pulse current signal which feeds the radiofrequency coil 123.

Preferably the excitation sequences are sequences of the "gradient echo" type, for example known Field Echo - Echo Planar Imaging (FE EPI) sequences. Such a sequence is in fact a fast sequence, which allows acquisition of an image in a time compatible with the speed of the conveyor belt 14 and is particularly sensitive to lack of homogeneity of the static magnetic field B₀.

In the presence of the pulses of the sequence of gradient pulses, the current flowing inside each of the gradient coils 122 generates a magnetic field which is superimposed on the static magnetic field B₀, producing an overall static magnetic field having a strength varying in a linear manner inside the longitudinal cavity 126 along the axes x, y and z.

In the presence of the pulses of the sequence of radiofrequency pulses, the current flowing inside the radiofrequency coil 122 generates an alternating radiofrequency magnetic field B₁ in a transverse direction with respect to the static magnetic field B₀.

The combined effect of the alternating radiofrequency magnetic field B₁ and the linear variation in strength of the overall static magnetic field is such that, during a step 202, it induces in the radiofrequency coil 123 an alternating current. This current is indicative of a number of magnetic resonance signals relating to the voxels into which a slice of the phantom body 124 (and, in particular, to the composition contained therein), in a plane parallel to the conveyor belt 14, may be decomposed. In particular, preferably, the slice of the phantom body 124 whose voxels generate the detected magnetic resonance signals is a coronal section substantially in the vicinity of the bottom surface of the phantom body 124.

During a step not shown in Figure 2, the alternating current induced in the radiofrequency coil 123 is received by the radiofrequency receiver 136 and forwarded to the data processing unit 137.

During a step 233, the data processing unit 137 preferably performs an analog-to-digital conversion of the alternating current acquired during step 202 and processes the digital data thus obtained so as to obtain an image of the slice of the phantom body 124 which generated the magnetic resonance signals.

During a subsequent step, not shown in Figure 2, the image may be forwarded to the control module 131, displayed by means of the display peripheral connected to the control module 131 and stored inside a storage device of the control module 131.

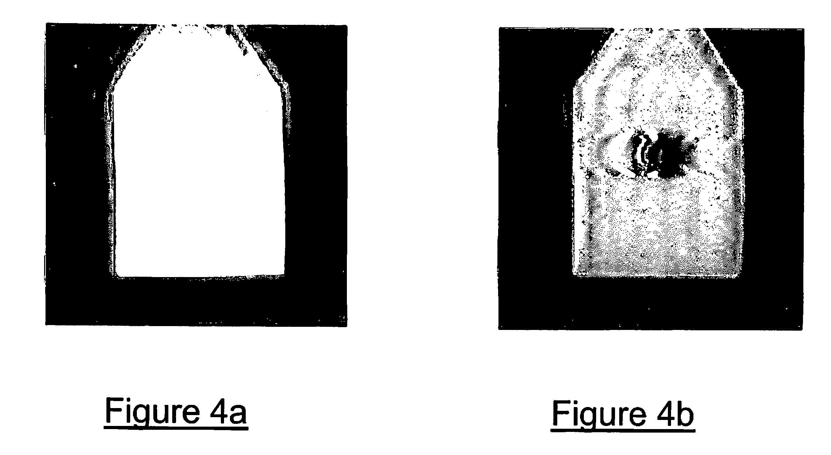

Figures 4a and 4b show, by way of example, two images of a slice of a phantom body in the vicinity of a packaged product without particles and a packaged product contaminated by a particle of ferromagnetic metal, respectively. In particular, the product is a granulated pharmaceutical product contained inside a laminated aluminium sachet. The images shown in Figures 4a and 4b were obtained using a magnetic resonance apparatus , with a static permanent magnetic field of 0.4 T and a phantom body, in the form of a parallelepiped, containing a solution of water and copper sulphate with dimensions 15 cm x 10 cm x 3 cm. The excitation sequences used to feed the gradient coils and the radiofrequency coil of the apparatus are FE EPI sequences with a duration of 1 second.

The image in Figure 4a relates to a slice of the phantom body in the vicinity of the packaged product not comprising any particle of ferromagnetic metal. The image in Figure 4b, on the other hand, is an image of the same slice of the phantom body when a packaged product is contaminated and comprises a particle of ferromagnetic metal, in particular a particle of steel with a diameter of about 0.5 mm. As can be seen, the image in Figure 4a has a zone, corresponding to the slice of the phantom body, with a homogeneous colour in that the static magnetic field present in the longitudinal cavity of the detection apparatus is homogeneous and hence the magnetic resonance signals generated by the voxels of the phantom body slice are not disturbed by the presence of the packaged product. The image in Figure 4b instead contains an artefact, namely a darker coloured region. In Figure 4b such an artefact is located about in the centre of the phantom body section. This artefact is due to a lack of homogeneity of the static magnetic field produced by the presence of the particle inside the packaged product. The lack of homogeneity is local in that it is confined to a region in the proximity of the particle position when the contaminated packaged product passes beneath the phantom body. Due to this local lack of homogeneity, only the magnetic resonance signals generated by voxels corresponding to elementary volumetric portions of the phantom body located in the proximity of the particle are disturbed and provide for the darker region in the image of Figure 4b, while the magnetic resonance signals of the other voxels are substantially undisturbed.

The images acquired by the detection apparatus 1 therefore indicate a possible disturbance of the static magnetic field. Therefore, advantageously, the presence of the particle may be effectively detected by means of inspection of the images of the phantom body 124 acquired by the detection apparatus 1 while the packaged products to be analysed are passed underneath it. If a particle of ferromagnetic metal is present inside a package, wherever it is, the image of a slice, which covers the total package surface, will certainly show some altered pixels resulting in an artefact of the acquired image. In other embodiments, the phantom body is arranged below the packaged product. In this case, the slice "covers from below" the total package surface.

Preferably, during a step 204, the acquired image is forwarded to the image processing module 138 which compares the acquired image with a reference image relating to the same section of the phantom body 124. This reference image could be, for example, an image acquired in the absence of a packaged product or in the presence of a packaged product which is not contaminated.

Therefore, preferably, the image processing module 138 during a step 205 determines whether an artefact is present in the acquired image. In order to determine the presence of an artefact, the image processing module 138 may, for example, implement an image recognition algorithm based on statistics relating to the presence of various shades of grey or colours in the images, or based on the recognition of sudden changes in the luminosity of the images, or the like. In particular, the recognition algorithm implemented by the image processing module 138 could be based on techniques which use statistical methods such as the PCA (Principal Component Analysis) technique, ICA (Independent Component Analysis) technique, LDA (Linear Discriminant Analysis) technique, or the like. If the image acquired by the detection apparatus 1 contains an artefact, the image processing module 138 generates an alarm signal. The alarm signal is then sent to the control module 131 which preferably, during a step 206, sends a command to its display device so that it displays an alarm message and/or a command to its audio reproduction device so that it emits an alarm sound. In this way, an operator monitoring the operation of the detection apparatus 1 may be alerted as to the presence of a packaged product containing one or more contaminating particles of ferromagnetic metal and therefore decide to interrupt the movement of the conveyor belt 14 and remove the contaminated packaged product from the line.

The image acquisition operation is preferably repeated periodically by the detection apparatus 1. The repetition period of the image acquisition operation is preferably chosen depending on the duration of the excitation sequences and a packaging interval of the machine for conveying packaged products cooperating with the detection apparatus 1. The packaging interval is essentially the interval occurring between the two instants when two successive packaged products 15 are placed on the conveyor belt 14, the speed of the conveyor belt depending on this interval. For example, the excitation sequences may have a duration of 1 second, while the packaging interval may be of about 2 seconds. Preferably, the repetition period of the image acquisition operation is chosen so that, during each repetition period, an image of the phantom body 124 relating to the passage of a packaged product 15 (or several adjacent packaged products) conveyed on the conveyor belt 14 when the latter is situated next to the phantom body 124 (i.e. immediately underneath it) is acquired. During subsequent periods, images of the phantom body 124 relating to all the products in a row (or in adjacent rows) on the conveyor belt 14 are then acquired. In this way, a precise check may be performed so that only the products which are actually contaminated may be removed, where necessary, from the line.

Advantageously, the detection apparatus 1 described above allows detecting the presence of a particle of a ferromagnetic metal inside a packaging comprising a paramagnetic and/or diamagnetic material in a simple, rapid and reliable manner.

Indeed, advantageously, the method of the present invention is more reliable than the method of WO 2004/104989. Instead of acquiring a single magnetic resonance signal as in WO 2004/104989 related to the whole stationary sample, the present invention provides for acquiring an image indicative of a set of magnetic resonance signals related to the different voxels of a slice of the phantom body (e.g. immediately above the packaged product), which are distributed in space. Hence, when a metal particle in a packaged product passes underneath the phantom body, since the lack of homogeneity of the static magnetic field is localized around the particle, the particle disturbs the magnetic resonance signals generated by the voxels located in its proximity in the plane of the slice. Wherever the particle is inside the packaged product, it is thus very likely that its presence disturbs one or more of the distributed magnetic resonance voxel signals. Therefore, the method of the present invention is more sensitive than the method of WO 2004/104989. Indeed in WO 2004/104989 the local disturbance due to the particle is to be detected on a single magnetic resonance signal related to the whole stationary sample. Hence the disturbance may be negligible with respect to this "global" signal and hardly detectable. Advantageously, in the present invention the local disturbance due to the particle is to be detected on local magnetic resonance signals and it is hence more evident and immediately recognizable by processing the generated image. Therefore, the method of the present invention provides for a more reliable detection of metal particles in packaged products.

Moreover, advantageously, due to the improved sensitivity, the intensity of the static magnetic field needed to achieve such a detection is reduced to values of tenths of Tesla, which are not hazardous for the safety of the operators.

Moreover, advantageously, the radiofrequency coil and the phantom body used for acquisition of the images are in a fixed position inside the main magnet. This advantageously avoids the need for centring scans aimed to calibrate the apparatus and then simplifies the operation thereof. Moreover, in order to detect the lack of homogeneity of the static field, it is sufficient to analyse a single image of a section of the phantom body in the vicinity of the packaged product. Therefore, the radiofrequency waveform generator may generate a monochromatic wave having always the same frequency during each repetition period of the acquisition operation since it is not required to acquire images relating to different slices of the phantom body. Each slice of the phantom body in fact corresponds to a particular frequency. The image acquisition operation is therefore advantageously rapid and simple from a computational point of view. Moreover, advantageously, the control module does not have to store a set of different excitation sequences since the gradient coils and the radiofrequency coil may be operated using always the same excitation frequency.

According to an alternative embodiment not shown in the drawings, the image acquisition unit of the detection apparatus may comprise two phantom bodies. Preferably, the two phantom bodies are substantially the same. In particular, according to this alternative embodiment, the image acquisition unit comprises a top phantom body and a bottom phantom body located in fixed and diametrically opposite positions relative to the longitudinal axis of the main magnet. Preferably, the bottom phantom body and the top phantom body are vertically aligned. The relative position of the top phantom body, the conveyor belt and the bottom phantom body is such that a packaged product which, on the conveyor belt, passes next to the position of the top phantom body and bottom phantom body is situated at a minimum distance from both of them.

In this case, during a repetition period of the image acquisition operation, two images are acquired, i.e. one for a slice of the top phantom body and one for a slice of the bottom phantom body. In this way, advantageously, both images may be compared with the reference image in order to detect the presence of a particle so as to increase the reliability of the detection process.

## Claims

1. A method for checking a packaged product (15) in order to know if said packaged product (15) is free of particles of a ferromagnetic metal or contains a particle of a ferromagnetic metal, wherein said packaged product (15) comprises a packaging comprising a paramagnetic and/or diamagnetic metal, said method comprising:
a) providing a static magnetic field;
b) providing a phantom body (124) in said static magnetic field;
c) plunging said packaged product (15) into said static magnetic field;
d) acquiring a number of magnetic resonance signals generated by elementary volumetric portions of a slice of the phantom body (124);
e) on the basis of said magnetic resonance signals, generating an image of said slice;
f) comparing said image with a reference image;
g) if said comparing does not show an artefact, declaring that said packaged product (15) is free of particles of a ferromagnetic metal; and
h) if said comparing shows an artefact, declaring that said packaged product (15) contains a particle of a ferromagnetic metal.

2. The method according to claim 1, wherein said slice is situated in the vicinity of said packaged product (15).

3. The method according to claim 1 or 2, wherein said slice comprises a surface of the phantom body (124) facing said packaged product (15).

4. The method according to claim 3, wherein said packaging is a sachet, and said method further comprises conveying said packaged product (15) arranged substantially parallel to said surface.

5. The method according to claim 3 or 4, wherein said surface is at a distance less than about 5 cm from said packaged product (15).

6. The method according to any of the preceding claims, wherein said reference image corresponds to an image of said packaged product (15) free of ferromagnetic metal particles.

7. The method according to claim 1, wherein said step h) comprises generating an alarm signal.

8. An apparatus (1) for checking a packaged product (15) in order to know if said packaged product (15) is free of particles of a ferromagnetic metal or contains a particle of a ferromagnetic metal, wherein said packaged product (15) comprises a packaging comprising a paramagnetic and/or diamagnetic metal, said apparatus (1) comprising:
- a main magnet (11) providing a static magnetic field;
- a phantom body (124), said phantom body (124) being in a fixed position with respect to said main magnet (11) and comprising a composition able to generate magnetic resonance signals of elementary volumetric portions of a slice of said phantom body (124) when subject to said static magnetic field;
- a signal detection unit (12) acquiring said magnetic resonance signals generated by said elementary volumetric portions of said slice of the phantom body (124); and
- a control unit (13) comprising:
- a data processing unit (137) suitable for, on the basis of said magnetic resonance signals, generating an image of said slice; and
- an image processing module (138) suitable for comparing said image with a reference image.

9. The apparatus (1) according to claim 8, wherein said main magnet (11) is a permanent magnet.

10. The apparatus (1) according to claim 8 or 9, wherein said signal detection unit (12) comprises a radiofrequency coil (123) suitable for acquiring said magnetic resonance signals.

11. The apparatus (1) according to claim 10, wherein said radiofrequency coil (123) is in a fixed position with respect to said main magnet (11).

12. The apparatus (1) according to any of claims 8 to 11, wherein said image processing module (138) is suitable for generating an alarm signal if said image contains an artefact.

13. The apparatus (1) according to any of claims 8 to 12, wherein said packaging is a sachet.

14. A system for conveying a packaged product (15), wherein said packaged product (15) comprises a packaging comprising a paramagnetic and/or diamagnetic metal, said system comprising a conveying device (14) and an apparatus (1) for checking said packaged product (15) in order to know if said packaged product is free of particles of a ferromagnetic metal or contains a particle of a ferromagnetic metal, said apparatus (1) being according to any of claims 8 to 13.

15. The system according to claim 14, wherein said conveying device (14) is partially housed inside a longitudinal cavity (126) of said main magnet (11).

16. The system according to claim 14 or 15, wherein said packaging is a sachet, wherein said conveying device (14) conveys said packaged product (15) arranged substantially parallel to said phantom body (124).
